# EUROPÄISCHE PATENTANMELDUNG

(11) **EP 3 839 841 A1**
(43) Veröffentlichungstag der Anmeldung: **23.06.2021**
(21) Anmeldenummer: 20214430.9
(22) Anmeldetag: 16.12.2020
(51) Int. Cl.: G06Q 10/00

(54) **SYSTEM UND VERFAHREN ZUR KONTROLLIERTEN BEARBEITUNG, ÜBERWACHUNG UND ABRECHNUNG ZUR ENTSORGUNG EINES ENTSORGUNGSOBJEKTS, NÄMLICH MÜLL**

(30) Priorität: 17.12.2019 DE 102019134627
(71) Anmelder: Francotyp-Postalia GmbH, 13089 Berlin (DE)
(72) Erfinder: HÜBLER, Uwe, 15366 Neuenhagen (DE); HEINRICH, Clemens, 16515 Oranienburg (DE); ROSENAU, Dirk, 13469 Berlin (DE); GÜNTHER, Stephan, 16548 Glienicke (DE)
(74) Vertreter: Hertin und Partner Rechts- und Patentanwälte PartG mbB

(57) **Zusammenfassung**

Die Erfindung betrifft bevorzugt ein System und ein Verfahren zur kontrollierten Bearbeitung, Überwachung und Abrechnung zur Entsorgung eines Entsorgungsobjekt, nämlich Müll, wobei das System mindestens eine Arbeitsstation, eine Steuerungseinrichtung, ein Sicherheitsmodul, eine Erfassungseinrichtung, eine Auditoreinrichtung und einen dezentralen Server umfasst. Mittels der Erfassungseinheit wird mindestens eine Entsorgungsobjektinformation eines Entsorgungsobjekts und/oder eine Betriebsinformation und/oder eine Zustandsinformation erfasst. Auf Basis dieser Information sowie einer bereitgestellten Vorgabeinformation erstellt die Auditoreinrichtung eine Auditierungsinformation. Die Steuerungseinrichtung steuert die Arbeitsstation und startet und/oder regelt in Abhängigkeit der Auditierungsinformation einen Arbeitsprozess zur Bearbeitung des Entsorgungsobjekts. Bevorzugt erlaubt die Erfassungseinrichtung zudem das Erfassen einer Erzeugnisinformation über das durch den Arbeitsprozess erhaltendes Erzeugnis, sodass eine individuelle Abrechnung auf Basis der vorhandenen Informationen über das Entsorgungsobjekt sowie dessen Bearbeitung erstellt werden kann.

## Beschreibung

Die Erfindung betrifft bevorzugt ein System und ein Verfahren zur kontrollierten Bearbeitung, Überwachung und Abrechnung zur Entsorgung eines Entsorgungsobjekts, nämlich Müll, wobei das System mindestens eine Arbeitsstation, eine Steuerungseinrichtung, ein Sicherheitsmodul, eine Erfassungseinrichtung, eine Auditoreinrichtung und einen dezentralen Server umfasst. Mittels der Erfassungseinheit wird mindestens eine Entsorgungsobjektinformation eines Entsorgungsobjekts und/oder eine Betriebsinformation und/oder eine Zustandsinformation erfasst. Auf Basis dieser Information sowie einer bereitgestellten Vorgabeinformation erstellt die Auditoreinrichtung eine Auditierungsinformation. Die Steuerungseinrichtung steuert die Arbeitsstation und startet und/oder regelt in Abhängigkeit der Auditierungsinformation einen Arbeitsprozess zur Bearbeitung des Entsorgungsobjekts. Bevorzugt erlaubt die Erfassungseinrichtung zudem das Erfassen einer Erzeugnisinformation über das durch den Arbeitsprozess erhaltende Erzeugnis, sodass eine individuelle Abrechnung anhand der Informationen über das Entsorgungsobjekt sowie dessen Bearbeitung erstellt werden kann.

### Hintergrund und Stand der Technik

Weltweit beträgt das Abfallaufkommen ca. zwei Milliarden Tonnen Müll im Jahr. Die Entsorgung dieser erheblichen Menge an Müll stellt die Menschheit vor eine gewaltige Herausforderung und fordert immerwährend neue Innovationen. Der Müll wird üblicherweise deponiert, verbrannt oder recycelt. Insbesondere für den Transport und für die Lagerung von Müll ist es dabei essentiell diesen zu komprimieren bzw. zu verdichten, um eine platzeffektive Verwahrung zu ermöglichen.

Die Komprimierung und Verdichtung wird durch Müllpressen bewerkstelligt. Es sind Müllpressen bekannt, die unterschiedliche Abfallarten mit verschiedenem Druck verdichten. Beispielsweise darf recyclebarer Plastikmüll mit nur sehr geringem Druck verdichtet werden, da er in Sortieranlagen möglichst locker auf Bänder geschüttet wird und somit besser nach Materialarten getrennt werden kann. Sperrmüll oder Grünschnitt hingegen können mit weit größerem Druck verdichtet werden. Ein Druckstempel verdichtet allgemein den enthaltenden Müll in einem Container bis zu einem bestimmten vorgegebenen Enddruck. Anschließend fährt der Pressstempel wieder in die Ausgangsposition zurück, um das Einbringen von neuem Müll zu ermöglichen. Ein Container ist in der Regel voll, wenn der Enddruck keine Verdichtung des erhaltenden Materials mehr ermöglicht. Volle Container werden vom Betreiber abgeholt und zur Entsorgung gebracht. Der vorgegebene Enddruck ist je nach Müllart unterschiedlich vorgegeben.

Nachteilig sind bekannte Müllpressen allerdings dahingehend, dass Kunden ihren Müll häufig nicht sortenrein entsorgen. Es entstehen dadurch signifikante Mehrkosten bei der Entsorgung, da ein Nach-Sortieraufwand entsteht. Eine Nachbelastung der Kunden ist trotz technisch möglicher Erkennungsverfahren zur Müllidentifikation nicht möglich, weil eine Zuordnung bei der Entsorgung mit entsprechender Nachweisführung gegenüber dem Kunden logistisch sehr aufwändig ist.

### Aufgabe der Erfindung

Aufgabe der Erfindung ist es somit ein System bzw. ein Verfahren zur Entsorgung von Müll bereitzustellen, welches die Nachteile des Standes der Technik beseitigt. Insbesondere soll ein System und/oder ein Verfahren bereitgestellt werden, welches mit geringem logistischem Aufwand eine individuelle Berechnung der Entsorgungsleistung in Abhängigkeit von der bestellten und der tatsächlich in Anspruch genommen Leistung ermöglicht. Zudem sollte sich das Verfahren bzw. das System durch die Möglichkeit einer optimalen Kontrolle und Anpassung der Arbeitsprozesse sowie einem hohen Grad an Sicherheit auszeichnen.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

System zur kontrollierten Bearbeitung, Überwachung und Abrechnung zur Entsorgung eines Entsorgungsobjekts, nämlich Müll, umfassend mindestens folgende Komponenten: eine Arbeitsstation, eine Steuerungseinrichtung, ein Sicherheitsmodul, eine Erfassungseinrichtung, eine Auditoreinrichtung, und einen dezentralen Server, dadurch gekennzeichnet, dass
a) der dezentrale Server dazu eingerichtet ist einen Vorgabewert an die Auditoreinrichtung zu übermitteln;
b) die Erfassungseinrichtung dazu eingerichtet ist mindestens eine Entsorgungsobjektinformation eines Entsorgungsobjekts und/oder eine Betriebsinformation und/oder eine Zustandsinformation zu erfassen;
c) die Auditoreinrichtung dazu eingerichtet ist eine Auditierungsinformation auf Basis der Entsorgungsobjektinformation und/oder der Betriebsinformation und/oder der Zustandsinformation sowie dem Vorgabewert zu erstellen;
d) die Steuerungseinrichtung dazu eingerichtet ist die Arbeitsstation zu steuern und einen Arbeitsprozess zur Bearbeitung des Entsorgungsobjekts in Abhängigkeit der Auditierungsinformation zu starten und/oder regeln;
e) die Erfassungseinrichtung dazu eingerichtet ist eine Erzeugnisinformation über ein durch den Arbeitsprozess erhaltendes Erzeugnis zu erfassen und diese an die Auditoreinrichtung zu übermitteln;
f) die Auditoreinrichtung dazu eingerichtet ist die Auditierungsinformation mit der Erzeugnisinformation zu ergänzen und darauf basierend eine Abrechnungsinformation zu generieren;
wobei einer oder mehrere Datenübertragungsprozesse mindestens durch das Sicherheitsmodul kryptografisch abgesichert durchgeführt werden.

Ein wesentlicher Vorteil eines solchen Systems liegt in dem geringen logistischen Aufwand zur kontrollierten Bearbeitung, Überwachung und Abrechnung der Entsorgung eines Entsorgungsobjekts, da alle durchgeführten Schritte nacheinander und/oder parallel automatisiert abfolgen. Überdies ist das vorgeschlagene System durch den Einsatz eines Sicherheitsmoduls, welches mindestens ein Datenübertragungsprozess, bevorzugt mehrere, besonders bevorzugt alle Datenübertragungsprozesse, kryptografisch abgesichert durchführt, besonders sicher gegenüber Datendiebstahl und/oder Datenverlust ausgestaltet. Die Bereitstellung des Vorgabewertes über einen dezentralen Server ermöglicht zudem eine örtlich sowie zeitlich flexible Ausführung des im System behafteten Verfahrens, welche auf Veränderungen reagieren kann. Die Eingabe des Vorgabewertes durch einen Kunden an den dezentralen Server kann vorteilhaft vor oder nach der Ausführung des Verfahrens von einem beliebigen Ort ausgeführt werden. Ferner ermöglichen die Erfassungseinrichtungen besonders vorteilhaft eine detaillierte und umfangreiche Überwachung des Entsorgungsobjekts und/oder des Erzeugnisses, wodurch die Bearbeitungsparameter im Arbeitsprozess optimal ausgerichtet werden können.

Die Komponenten des Systems sind insbesondere zur Datenverarbeitung eingerichtet, wobei die Komponenten des Systems Mittel umfassen bzw. dafür konfiguriert sind die beschriebenen Verfahrensschritte auszuführen.

Das vorgeschlagene System umfasst mindestens eine Arbeitsstation, eine Steuerungseinrichtung, ein Sicherheitsmodul, eine Erfassungseinrichtung, eine Auditoreinrichtung und einen dezentralen Server. Die Arbeitsstation, die Steuerungseinrichtung, das Sicherheitsmodul, die Erfassungseinrichtung, die Auditoreinrichtung und der dezentralen Server werden im Sinne der Erfindung als Systemkomponenten bezeichnet. Der Begriff "mindestens" bedeutet im Sinne der Erfindung bevorzugt, dass das System beispielsweise mindestens eine Arbeitsstation umfasst, dass es aber ebenso bevorzugt sein kann, dass das System zwei oder drei Arbeitsstationen umfasst. Dies gilt analog für die anderen Systemkomponenten. Es kann auch sein, dass das System neben den genannten Systemkomponenten andere Komponenten umfasst. Es kann im Sinne der Erfindung bevorzugt sein, dass sich die Systemkomponenten gemeinsam an einem Ort befinden. Es kann aber auch bevorzugt sein, dass sich einzelne Systemkomponenten oder Gruppen von Systemkomponenten an unterschiedlichen Orten befinden oder dort aufgestellt sind.

Im Sinne der Erfindung ist die Arbeitsstation vorzugsweise dazu eingerichtet, mindestens einen Prozess-Schritt eines Arbeitsprozesses durchzuführen. Der Arbeitsprozess umfasst vorzugsweise einen oder mehrere Prozess-Schritte, wobei die Prozess-Schritte mit einer Arbeitsstation oder mehreren Arbeitsstationen des vorgeschlagenen Systems durchgeführt werden können. Vorzugsweise umfasst der Arbeitsprozess die Bearbeitung des Entsorgungsobjekts, wobei die Bearbeitung bevorzugt ein Fertigungsverfahren aufweist ausgewählt aus der Gruppe umfassend: Urformen, Umformen, Trennen, Fügen, Beschichten und/oder Änderung von Stoffeigenschaften (bspw. Härten, Glühen etc.). Dem Fachmann sind die benannten Fertigungsverfahren bekannt. Erfindungsgemäß wird das Entsorgungsobjekt besonders bevorzugt umgeformt, nämlich zusammengepresst. Das Zusammenpressen ist eine vorteilhaft besonders simple und daher wirtschaftliche Methode der Umformung.

In einer bevorzugten Ausführungsform ist die Arbeitsstation eine Pressstation und umfasst bevorzugt einen Druckstempel einer Müllpresse. Dieser Druckstempel ist dazu eingerichtet, dass er bevorzugt entlang eines Verfahrwegs verfahren kann. Die Kraft für die Bewegung des Druckstempels entlang des Verfahrwegs wird bevorzugt mechanisch und stärker bevorzugt hydraulisch aufgebracht. Dem Fachmann ist ein solcher Druckstempel einer Müllpresse bekannt. Ein Druckstempel stellt vorteilhaft eine über die Stempelauflagenfläche gleichmäßig verteilte Kraft bereit.

Bei der Arbeitsstation kann es sich jedoch auch um eine Sortierstation, eine Beförderungseinheit, eine Markierstation, eine Heizstation und/oder eine Zerkleinerungsstation. Auch weitere Arbeitsstationen, welche im Zusammenhang mit der Entsorgung von Müll genutzt werden, sind denkbar und können in mittels des Systems kontrolliert, gesteuert und überwacht werden.

In einer bevorzugten Ausführungsform ist die Arbeitsstation so ausgestaltet, dass sie mittels eines Fahrzeugs transportiert werden kann. Dabei kann eine Müllpresse bzw. ein Container, umfassend eine oder mehrere Arbeitsstationen, im Gestell des Fahrzeugs integriert oder in Form eines separaten Aufbaus an einem Fahrzeug befestigt sein, wobei der Aufbau ebenso vom Fahrzeug gelöst und an einem Ort abgestellt werden kann. Somit besteht die Möglichkeit das Entsorgungsobjekt bzw. Müll bei einem Kunden abzuholen und/oder ihm eine Müllpresse bzw. Container für die eigene Müllverdichtung zur Verfügung zu stellen.

In einer weiteren bevorzugten Ausführungsform ist die Arbeitsstation an einem Ort stationär ausgestaltet. Eine stationäre Müllentsorgungsanlage kann hierbei verschiedene Arbeitsstationen für verschiedene Müllarten oder verschiedene Arbeitsprozesse aufweisen. Die stationäre Ausgestaltung ermöglicht eine größere Dimensionierung der Arbeitsstationen, wodurch beispielsweise mit einem Pressvorgang eine erhöhte Menge an Müll verdichtet werden kann. Nach Durchführung des Arbeitsprozesses entsteht ein Erzeugnis. Bei dem Erzeugnis handelt es sich bevorzugt um das bearbeitete Entsorgungsobjekt. Das Erzeugnis weist vorteilhaft geringeres Volumen im Vergleich zu seinem Zustand als Entsorgungsobjekt auf. In einer weiteren bevorzugten Ausführungsform kann ein Erzeugnis aus mehreren hintereinander vorliegenden Entsorgungsobjekten bestehen.

Die erfindungsgemäße Auditoreinrichtung ist bevorzugt als eine zentrale Verarbeitungseinheit zu sehen. Sie umfasst vorzugsweise Mittel zum Verarbeiten, Speichern, Senden und Empfangen von Daten. Die Auditoreinrichtung steht bevorzugt mit allen Systemkomponenten in Datenverbindung, wodurch Daten zwischen den Systemkomponenten übertragen werden können. In einer bevorzugten Ausführungsform führt die Auditoreinrichtung alle systemrelevanten Algorithmen und Berechnungen aus, indem sie von den relevanten Systemkomponenten Input-Daten erhält und nach Ausführung der Algorithmen Output-Daten generiert, die an entsprechende weitere Systemkomponenten übertragen werden. Der Vorteil einer solchen Anordnung ist, dass nur die Auditoreinrichtung mit Komponenten zur Datenverarbeitung (Prozessor) und Datenspeicherung bestückt werden muss.

Es ist im Sinne der Erfindung ganz besonders bevorzugt, dass die Auditoreinrichtung ein Sicherheitsmodul umfasst. Das Sicherheitsmodul umfasst vorzugsweise ein Hardware Security Module (HSM) oder wird von einem solchen gebildet. Das HSM kann vorzugsweise auch Bestandteilt der Arbeitsstation oder einer anderen Komponente des vorgeschlagenen Systems sein.

Es ist im Sinne der Erfindung bevorzugt, dass das HSM ein hardwarebasiertes, kryptografisches Modul darstellt, das vorzugsweise eine FIPS-140-2-Zertifizierung aufweist. Durch die Vorsehung der mit FIPS-Zertifizierung arbeitenden Auditoreinrichtung wird insbesondere ein technisches Problem mit technischen Mitteln gelöst, nämlich die Bereitstellung einer besonders sicheren Datenübertragung innerhalb des Systems. Das HSM kann von einem Einzelchipmodul, einem autonomen Multichipmodul oder einem eingebetteten Multichipmodul gebildet werden oder ein solches umfassen. Das HSM ist vorzugsweise dazu eingerichtet, Daten besonders sicher zu speichern. Insbesondere ist ein HSM dazu in der Lage, kritische Sicherheitsparameter, wie Passwörter, vertrauliche Daten oder Schlüssel zur Verschlüsselung von Daten zu generieren, zu speichern, zu nutzen und/oder zu pflegen. Die Schlüssel können beispielsweise symmetrisch oder asymmetrisch sein. Vorteilhafterweise können HSM als kryptografische Coprozessoren eingesetzt werden. In bevorzugten Ausführungsformen kann ein HSM eine batteriebetriebene Schaltung und/oder eine Spannungsüberwachung aufweisen. Dadurch wird insbesondere die Integration oder Vorsehung einer Echtzeituhr zur korrekten Zeiterfassung und Zeitstempelung ermöglicht, wodurch beispielsweise gewährleistet werden kann, dass abgelaufene Schlüssel nicht länger genutzt werden können. Darüber hinaus kann ein HSM einen redundanten Speicher umfassen, der beispielsweise dafür genutzt werden kann, mehrere Technologien zur Erzeugung einer zusätzlichen Datensicherheit gleichzeitig zu verwenden.

Insbesondere kann mit Hilfe des HSM eine Public-Key-Infrastruktur auf höchstem Niveau realisiert werden, wie sie dem Fachmann bekannt ist.

Dadurch, dass die Systemkomponenten mit einem Sicherheitsmodul ausgestattet sind, können alle Datenübertragungsprozesse kryptografisch abgesichert durchgeführt werden. Besonders vorteilhaft wird das System dadurch widerstandsfähig gegen Manipulation und unbefugtes Lesen der Daten.

In einer bevorzugten Ausführungsform der Erfindung umfasst das HSM eine Kette von Zertifikaten, die vorzugsweise vor Inbetriebnahme des HSM auf die Vorrichtung geladen werden. Das HSM ist darüber hinaus dazu eingerichtet, eigene private und öffentliche Geräteschlüssel zu erzeugen. Vorzugsweise verlässt der private Schlüssel zu keinem Zeitpunkt das HSM, während der öffentliche Schlüssel nach außen abgegeben werden kann, zum Beispiel an einen dezentralen Server zur dortigen Signierung. Im Gegenzug kann das HSM ein personalisiertes, signiertes Gerätezertifikat erhalten, mit dem das HSM die Sicherheit in einem Internet of Things-System (IOT) deutlich erhöhen kann. Das HSM kann dann vom dezentralen Server als "echte" Sicherheitseinrichtung erkannt und authentifiziert werden, was insbesondere durch die Vergabe einer eindeutigen Kennung ermöglicht wird. Auf diese Weise lassen sich besonders unkompliziert authentifizierte TLS-Verbindungen herstellen (Transport Layer Security).

Die Auditoreinrichtung kann im Sinne der Erfindung bevorzugt auch als Auditor bezeichnet werden, wobei die Bezeichnungen als Synonym verwendet werden. Die Überwachung des Auditors kann im Sinne der Erfindung auch als "Mithören" der Abfrage durch die Systemsteuerung betrachtet werden, wobei die Funktion der Systemsteuerung insbesondere von einer Steuerungseinrichtung innerhalb des vorgeschlagenen Systems übernommen wird.

In einer bevorzugten Ausführungsform umfasst die Erfassungseinrichtung mindestens einen Sensor oder ein Sensorsystem. Ein Sensor kann physikalische (z.B. Wärmemenge, Temperatur, Feuchtigkeit, Druck, Schallfeldgrößen, Helligkeit, Beschleunigung) oder chemische (z. B. pH-Wert, lonenstärke, elektrochemisches Potential) Eigenschaften und/oder die stoffliche Beschaffenheit seiner Umgebung qualitativ oder als Messgröße quantitativ ermitteln. Diese Größen werden mittels physikalischer oder chemischer Effekte erfasst und in ein weiter verarbeitbares elektrisches Signal umgewandelt.

In einer bevorzugten Ausgestaltung umfasst die Erfassungseinrichtung einen Sensor ausgewählt aus der Gruppe umfassend: Temperatursensor, Wegsensor, Drucksensor (Kraftsensor), Beschleunigungssensor, Bildsensor. Dem Fachmann sind die genauen Ausgestaltungen und die in den Sensoren aufweisenden Komponenten bekannt.

Die Sensoren der Erfassungseinrichtung sind bevorzugt dazu eingerichtet, eine Zustandsinformationen und/oder einen Betriebsinformationen und/oder eine Entsorgungsobjektinformation und/oder Erzeugnisinformation zu erfassen. Die Kombination aus allen Informationen ergeben eine umfassende Gesamtinformation, aus der insbesondere detaillierte Erkenntnisse des Entsorgungsobjekts und/oder des Erzeugnisses gewonnen werden.

Die Erfassungseinrichtung kann im Sinne der Erfindung auch in mehrere Erfassungseinrichtungen unterteilt werden, wobei die jeweiligen Erfassungseinrichtungen unterschiedliche Sensoren umfassen.

In einer bevorzugten Ausführungsform umfasst die Erfassungseinrichtung einen Speicher, einen Prozessor und/oder ein Sicherheitsmodul. Dadurch kann die Erfassungseinrichtung die erfassten Informationen einer Vorbearbeitung unterziehen. Dies kann beispielsweise eine erste Analyse oder eine Filterung der aufgenommenen Daten aufweisen, wodurch die Auditoreinrichtung vorteilhaft weniger Leistung zur Datenverarbeitung sowie Speicher benötigt.

In einer Ausführungsform der Erfindung ist ein dezentraler Server dem System zugehörig, liegt jedoch bevorzugt örtlich entfernt von den anderen Systemkomponenten vor. Dem Fachmann ist ein Server bekannt. Im Sinne der Erfindung ist ein dezentraler Server auch als externer Server zu verstehen. Der Server kann in Verbindung mit dem Internet stehen.

In einer weiteren bevorzugten Ausführungsform stehen alle oder einige Systemkomponenten in Verbindung zueinander, d.h. bevorzugt besteht eine Datenverbindung zwischen den Systemkomponenten. Aufgrund der vorzugsweise in den Systemkomponenten aufweisenden Sicherheitsmodule werden alle Datenübertragungsprozesse (über die jeweiligen Datenverbindungen) vorzugsweise kryptografisch abgesichert durchgeführt. Es versteht sich, dass im bevorzugten System nicht zwingend alle Datenübertragungsprozesse kryptografisch abgesichert durchgeführt werden müssen. Es kann beispielsweise bevorzugt sein, dass nicht jeder Systemkomponente eine Sicherheitsmodul zugeordnet ist und/oder einige Sicherheitsmodule sicherheitsunkritische Datenübertragungen nicht absichern, um einen Stromverbrauch des bevorzugten Systems einzusparen. Im Sinne der Erfindung wird bevorzugt mindestens ein Datenübertragungsprozess kryptografisch abgesichert. In bevorzugten Ausführungsform werden alle Datenübertragungsprozesse mindestens durch das Sicherheitsmodul kryptografisch abgesichert durchgeführt.

Das Senden und Empfangen von Daten wird bevorzugt auch als Übertragung von Daten verstanden. Die Übertragung erfolgt bevorzugt drahtlos durch gerichtete oder ungerichtete elektromagnetische Wellen, wobei der Bereich des genutzten Frequenzbands je nach Anwendung und verwendeter Technik von wenigen Hertz (Niederfrequenz) bis hin zu mehreren hundert Terahertz (sichtbares Licht) variieren kann. Erfindungsgemäß werden bevorzugt folgende Datenübertragungsverfahren genutzt: Bluetooth, WLAN, ZigBee, NFC, Wibree, GPRS, EDGE, UMTS, HSPA, LTE, 5G oder WiMAX im Radiofrequenzbereich sowie IrDA und optischer Richtfunk (FSO) im infraroten bzw. optischen Frequenzbereich. Dem Fachmann sind die Datenübertragungsverfahren aus dem Stand der Technik bekannt.

In einer weiteren Ausführungsform umfassen eine Mehrzahl oder alle Systemkomponenten eine Antenne, die dazu eingerichtet ist Daten zu senden und/oder zu empfangen. Eine drahtlose Datenübertragung zwischen den Systemkomponenten ermöglicht einen vorteilhaften Aufbau des gesamten Systems, da keine elektrischen Kabel (Signalleiter) zwischen den Systemkomponenten verlegt werden müssen. Insbesondere können Systemkomponenten ortsunabhängig von anderen Systemkomponenten positioniert werden. Beispielsweise können die Systemkomponenten: eine Arbeitsstation, eine Steuerungseinrichtung, ein Sicherheitsmodul, eine Erfassungseinrichtung und eine Auditoreinrichtung in einer Müllpresse in Deutschland integriert sein, während der dezentrale Server an einem Ort in den USA steht.

In einer bevorzugten weiteren Variante der Erfindung umfassen die Systemkomponenten analoge und digitalen Ausgänge für eine Übertragung von Daten über Signalleiter. Dabei kann der Signalleiter bevorzugt einen elektrischen Leiter und/oder einen Lichtwellenleiter umfassen. Ein Lichtwellenleiter ist dabei bevorzugt als Glasfaserkabel ausgestaltet. Ein Signalleiter kann ebenfalls bevorzugt als Koaxialkabel ausgestaltet sein. Der Vorteil eines Signalleiters ist die schnelle Datenübertragung. Zudem ist sie sicherer gegenüber drahtloser Übertragung im Kontext von Datendiebstahl und Eindringen in den Datenverkehr.

Erfindungsgemäß wird ein Vorgabewert des zentralen Servers an die Auditoreinrichtung übermittelt. Bevorzugt geschieht dies durch eine drahtlose Datenübertragung. Vorzugsweise über die Technologien des mobilen Internets UMTS, HSPA, LTE und/oder 5G wird die Übermittlung des Vorgabewerts an die Auditoreinrichtung gewährleistet. Dies kann durch eine direkte Datenverbindung zum dezentralen Server geschehen. Dem dezentralen Server und der Auditoreinrichtung können jedoch ebenfalls ein oder mehrere weitere Server zwischengeschaltet sein, sodass der dezentrale Server den Vorgabewert an einen (oder mehrere) Zwischenserver sendet und dieser den Vorgabewert anschließend der Auditoreinrichtung bereitstellt. Vorteilhaft kann durch mehrere zwischengeschaltete Server die Sicherheit des Systems erhöht werden, da der Datenverkehr schwerer nachvollziehbar ist.

Erfindungsgemäß steht der Vorgabewert bevorzugt zeitlich vor dem Start des Arbeitsprozesses auf dem dezentralen Server zur Verfügung, sodass der Server den Vorgabewert der Auditoreinrichtung ebenfalls vor dem Start des Arbeitsprozesses übermittelt. Der Vorgabewert kann allerdings während des Arbeitsprozesses dem dezentralen Server zur Verfügung gestellt werden, sodass der Server den Vorgabewert der Auditoreinrichtung ebenfalls während des Arbeitsprozesses übermittelt.

Das System ist dazu eingerichtet, dass es trotzdem den Vorgabewert in die Regelung miteinfließen lassen kann. In einer weiteren bevorzugten Ausführungsform steht dem dezentralen Server kein Vorgabewert zur Verfügung, sodass ebenfalls kein Vorgabewert an die Auditoreinrichtung übermittelt wird. Das System ist dazu eingerichtet, einen Arbeitsprozess trotzdem zu starten und zu regeln ohne die Information des Vorgabewertes. Vorteilhaft ist das System dazu in der Lage unabhängig vom Vorgabewert zu handeln und überraschenderweise generiert das System trotzdem mit wenig Fehlern behaftete Abrechnungsinformationen.

Ein "Vorgabewert" meint bevorzugt eine Information, welche das System durch eine externe Quelle beispielsweise einen externen Server erhält und welche sich auf das Entsorgungsobjekt und/oder einem an dem Entsorgungsobjekt vorzunehmenden Arbeitsprozess bezieht.

Bei einem Vorgabewert handelt es sich bevorzugt um eine Input-Information, die dem System als Referenzwert und/oder als Ausgangswert bzw. Richtwert dient. Der Vorgabewert wird bevorzugt durch einen Nutzer/Kunden definiert. Es kann sich dabei um eine Information, wie beispielsweise die (voraussichtliche) Entsorgungsobjektart und/oder die (voraussichtliche) Entsorgungsobjektmenge und/oder die schon geleistete Zahlung für eine Entsorgung etc., handeln.

In einer bevorzugten Ausführungsform basiert die Auditierungsinformation auf der Entsorgungsobjektinformation und/oder der Betriebsinformation und/oder der Zustandsinformation und/oder dem Vorgabewert und/oder der Erzeugnisinformation. Vorzugsweise ist die Auditoreinrichtung dazu eingerichtet, die Auditierungsinformation an die Steuerungseinrichtung des vorgeschlagenen Systems weiterzuleiten beziehungsweise dorthin zu senden. Dazu umfasst der Auditor vorzugsweise die entsprechenden Kommunikationsmittel. In diesem Zusammenhang stellt der Auditor den Informationsgeber und die Steuerungseinrichtung den Informationsempfänger dar.

Erfindungsgemäß ist die Steuerungseinrichtung so ausgestaltet, dass sie eine gerichtete Beeinflussung des Verhaltens der Arbeitsstation ermöglicht. In einer bevorzugten Ausgestaltung ist die Steuerungseinrichtung in der Lage, die Arbeitsstation zu steuern sowie zu regeln. Beim Steuern wird mit Hilfe einer Stellgröße die Arbeitsstation beeinflusst - ohne, dass die Steuergröße auf die Stellgröße zurückwirkt. Das Regeln ist bevorzugt erfindungsgemäß ein Vorgang, bei dem der "IST-Wert" einer Größe ermittelt und durch Nachstellen einem "SOLL-Wert" angeglichen wird. Der "IST-Wert" wird bevorzugt durch die Erfassungseinheit ermittelt. Anhand der Regelung der Arbeitsstation durch die Steuerungseinrichtung ist es vorteilhaft möglich auf Veränderungen des zu bearbeitenden Entsorgungsobjekts innerhalb kurzer Zeit zu reagieren und die Arbeitsstation dahingehend durch die Steuerungseinrichtung anzupassen.

Im Sinne der Erfindung bringt die Auditierungsinformation ein Auditierungsergebnis hervor. Beispielsweise kann das Auditierungsergebnis positiv sein, wenn die Auditierungsinformation entsprechenden SOLL-Werten übereinstimmt, während ein negatives Auditierungsergebnis erhalten wird, wenn die Auditierungsinformation nicht mit den SOLL-Werten übereinstimmt, wobei beispielsweise eine Nicht-Übereinstimmung ausreicht, um ein insgesamt negatives Auditierungsergebnis zu erhalten. Bei einem positiven Auditierungsergebnis kann bevorzugt in der Steuerungseinrichtung ein Startsignal für das Arbeitsverfahren erzeugt und an die Arbeitsstationen, an denen die Prozess-Schritte durchgeführt werden, gesendet werden. Bei einem negativen Auditierungsergebnis unterbleibt die Erzeugung und der Versand eines entsprechenden Startsignals. Das beschriebene Verfahren kann bei einem negativen Auditierungsergebnis zu einem späteren Zeitpunkt wiederholt werden. Wenn dann ein positives Auditierungsergebnis erhalten wird, kann dies zur Durchführung des Arbeitsprozesses führen.

In einer weiteren bevorzugten Ausgestaltung ist die Auditoreinrichtung ein Bestandteil der Arbeitsstation, mit welcher der Arbeitsprozess an einem Entsorgungsobjekt durchgeführt wird. Ferner können auch alle anderen Systemkomponenten Bestandteil der Arbeitsstation sein. Erfindungsgemäß kann jede Systemkomponente Bestandteil einer weiteren Systemkomponente sein.

Im Sinne der Erfindung sind die Erzeugnisinformation bevorzugt ausgewählt aus der Gruppe umfassend Erzeugnisabbild, Erzeugnisgröße, Erzeugnistemperatur, Erzeugnisdichte, Erzeugnisoberfläche und/oder Müllart, beispielsweise Grünschnitt, Sperrmüll, Plastikmüll, Altglas, Restmüll, Altpapier und/oder Elektronikschrott, ohne auf diese beschränkt zu sein. Für das Hervorbringen von Erzeugnisinformationen ist das Erfassen des Erzeugnisses über die Erfassungseinrichtung notwendig. Vorteilhaft wird durch das Erfassen dieser Informationen die Abrechnung einer real getätigten Leistung erst möglich und mit einem Vorgabewert vergleichbar.

Vorzugsweise wird die Abrechnungsinformation in Abhängigkeit von der Auditierungsinformation erstellt. Da die Auditierungsinformation durch den Vorgabewert, der Zustandsinformation, der Betriebsinformation, der Entsorgungsobjektinformation und der Erzeugnisinformation definiert ist, weist die Auditierungsinformation bevorzugt den tatsächlich geleisteten Aufwand für die Entsorgung des bereitgestellten Entsorgungsobjekts auf und kann diesen Aufwand einer entsprechenden Abrechnungsinformation zuordnen. Hierbei kann bevorzugt ebenfalls ein Vergleich mit einem Vorgabewert, welcher durch den Kunden/Nutzer in der Vergangenheit schon geleisteten Abrechnungsinformationen umfassen kann, durch die Auditdoreinrichtung getätigt werden. Überdies beschreibt die Auditierungsinformation zum Beispiel auch, ob eine Arbeitsstation einsatzbereit ist oder nicht.

In einer weiteren bevorzugten Ausführungsform der Erfindung umfasst das Sicherheitsmodul eine Speichereinrichtung, wobei die Auditierungsinformation und/oder die Abrechnungsinformation in der Speichereinrichtung abspeicherbar sind. Dadurch können die abgespeicherten Informationen zu einem späteren Zeitpunkt für andere Zwecke verwendet oder ausgelesen oder einem bestimmten Nutzerprofil zugeordnet werden. Es kann im Sinne der Erfindung bevorzugt sein, die Abrechnungsinformationen lokal zu speichern oder remote auf die Abrechnungsinformationen zuzugreifen. Die lokale Speicherung der Abrechnungsinformationen innerhalb des Systems, beispielsweise an dem Ort, wo die Daten erzeugt und/oder erhoben werden, ermöglicht eine Vorfilterung der Daten, so dass beispielsweise nicht mehr alle Daten oder Datensätze von der Erfassungseinrichtung an die Auditoreinrichtung übermittelt werden müssen, sondern lediglich eine deutlich geringere Datenmenge. Dadurch, dass insgesamt weniger Daten übertragen werden müssen, werden Übertragungsressourcen eingespart und die Übertragung der relevanten Daten kann schneller und mit geringerem Aufwand erfolgen.

Es kann im Sinne der Erfindung auch bevorzugt sein, dass das Sicherheitsmodul dazu eingerichtet ist, die Auditierungsinformation und/oder die Abrechnungsinformation in dem dezentralen Server abzuspeichern. Dadurch kann auf die Vorsehung eines Speicherplatzes innerhalb des Systems verzichtet werden, wodurch Platz gespart wird, beziehungsweise ein besonders raumsparendes System bereitgestellt werden kann. Wenn die Daten in einem dezentralen Server abgespeichert werden, können die Daten verschiedener Systeme beziehungsweise verschiedener Systemkomponenten miteinander verglichen werden. Dies kann beispielsweise erfolgen, um im Rahmen eines Benchmarking-Prozesses Durchschnittswerte beziehungsweise Abweichungen zu ermitteln. Auch eine Identifikation von Systemkomponenten zu identifizieren, die "im Soll" oder beispielsweise mit einem besonders hohen Verbrauch arbeiten ist möglich. Diese Daten können dann vorteilhafterweise im Rahmen einer predictive maintenance oder einer Fernwartung eingesetzt werden, um den Betrieb eines Systems oder einer Anlage zu optimieren.

In einer weiteren bevorzugten Ausführungsform der Erfindung ist das System dadurch gekennzeichnet, dass die Auditoreinrichtung dazu eingerichtet ist anhand der Auditierungsinformation dem Entsorgungsobjekt und/oder dem Erzeugnis eine Identifikationsinformation zuzuordnen. Eine Identifikationsinformation ermöglicht vorteilhaft die Generierung einer individuellen Abrechnung von Entsorgungsobjekten.

Im Sinne der Erfindung ist eine Identifikationsinformation bevorzugt eine Information über die Klassifikation eines Entsorgungsobjekts und/oder Erzeugnisses. Für die Identifikation von Entsorgungsobjekten und/oder Erzeugnissen ist die Auditoreinrichtung bevorzugt so ausgestaltet, dass sie anhand von Klassifikationsalgorithmen durch alle erfassten Daten (z.B. Zustandsinformation, Betriebsinformation, Entsorgunsobjektinformation, Erzeugnisinformation) sowie dem Vorgabewert das Entsorgungsobjekt und/oder das Erzeugnis einer Klasse zuordnen kann und es damit identifiziert. Die Identifikationsinformation wird dementsprechend über Klassifikationsalgorithmen aus den Auditierungsinformationen bestimmt.

Diese Zuordnung der Identifikationsinformation kann bevorzugt sowohl vor der Bearbeitung des Entsorgungsobjektes als auch während der Durchführung der Bearbeitung sowie nach der Bearbeitung erfolgen.

Die einzelnen Klassen werden vorzugsweise anhand bestimmter übereinstimmender Merkmale ermittelt. In anderen Worten ist ein Klassifikationsalgorithmus bevorzugt eine Funktion, die einen Merkmalsraum auf eine Menge von Klassen abbildet. Ein Merkmal eines Entsorgungsobjekts und/oder Erzeugnisses ist zum Beispiel die Farbe, die Dichte, die Größe oder die Temperatur etc. In einer bevorzugten Ausführungsform ist die Klassifizierung, in welche das Entsorgungsobjekt und/oder das Erzeugnis eingeordnet werden kann, die Müllart: Grünschnitt, Sperrmüll, Plastikmüll, Altglas, Restmüll, Altpapier und/oder Elektronikschrott.

Im Sinne der Erfindung basieren Klassifikationsalgorithmen besonders bevorzugt auf Verfahren der künstlichen Intelligenz, insbesondere auf Verfahren des Maschinellen Lernens (Machine Learning Algorithmen). Es können jedoch auch simple Algorithmen sein, welche keine Verfahren der künstlichen Intelligenz anwenden

Dem Fachmann ist bekannt, dass Machine Learning Algorithmen einen Teilbereich der künstlichen Intelligenz (Artificial Intelligence) sind. Machine Learning nutzt dabei mathematische und statistische Modelle, um aus Datenbeständen zu "lernen". Im Allgemeinen haben Machine Learning Algorithmen den Vorteil, dass Informationen, die für einen menschlichen Beobachter zu komplex sind, automatisch aus einem großen Datensatz extrahiert werden können. Es gibt eine Vielzahl von Machine Learning Algorithmen, die sich im Wesentlichen in drei unterschiedliche Lernverfahren unterscheiden lassen: Supervised Learning, Unsupervised Learning und Reinforcement Learning.

Besonders bevorzugt werden erfindungsgemäß Verfahren des Supervised Learning für die Analyse oder Verarbeitung der Auditierungsinformation genutzt. Beim Supervised Learning Verfahren wird zunächst ein sogenannter Trainingsprozess durchgeführt. Hierbei werden Trainingsdaten in Form von Eingabedaten zusammen mit den entsprechenden Zieldaten bereitgestellt. Der Zweck eines Trainings im Machine Learning Verfahren, ist bevorzugt Parameter einer Funktion so anzupassen, dass die Funktion anschließend in der Lage ist, den Zielwert mit hoher Genauigkeit von dem entsprechenden Eingabewert zu bestimmen. Die angepasste Funktion wird nach dem Trainingsprozess zur Vorhersage von Zieldaten für zuvor nicht sichtbare Eingabedaten verwendet. Die Funktion wird dabei durch ein mathematisches und/oder statistisches Modell beschrieben.

In einer bevorzugten Ausführungsform wird hierbei die Funktion durch Support Vektor Machine, Bayes Netze und/oder Entscheidungsbäume ausgestaltet. Besonders bevorzugt wird die Funktion durch ein künstliches neuronales Netz beschrieben. Hierbei können die künstlichen neuronalen Netze erfindungsgemäß verschiedene Architekturen aufweisen und beispielsweise als Deep Feed Forward (DFF) Network, Recurrent Neural Network (RNN), Deep Convolutional Network (DCN), Deconvolutinal Network (DN), Convolutional Neural Network (CNN), Deep Residual Network (DRN), Boltzmann-Maschine, Time Delay Neural Networks (TDNNs) ausgebildet sein.

Im Sinne der Erfindung sind die Eingabedaten bevorzugt durch die Auditierungsinformationen, definiert. Diese setzen sich aus den erfassten Zustandsinformationen, Betriebsinformationen, Entsorgunsobjektinformationen, Erzeugnisinformationen sowie dem Vorgabewert zusammen.

Erfindungsgemäß sind Zieldaten bevorzugt durch die Einordnung in eine bestimmte Klasse definiert. Ebenso können auch Wahrscheinlichkeiten für die Zugehörigkeit in eine bestimmte Klasse als Zieldaten ausgegeben werden. Dies entspricht bevorzugt der Identifikationsinformation im Sinne der Erfindung.

In einer weiteren bevorzugten Ausführungsform wird das Verfahren des Unsupervised Learning für die Analyse oder Verarbeitung der Auditierungsinformation genutzt. Beim Unsupervised Learning versucht der Algorithmus in den Eingabedaten Muster zu erkennen, die von einem strukturlosen Rauschen abweichen. Die Funktion im Trainingsprozess orientiert sich dabei nur an den Ähnlichkeiten der Eingabedaten und passt ihre Parameter dementsprechend an, sodass keine Ausgabedaten für den Trainingsprozess verwendet werden.

In einer bevorzugten Ausführungsform werden anhand des Unsupervised Learning Verfahrens Segmentierungen bzw. Clustering der Eingabedaten oder aber auch bevorzugt Komprimierungen der Eingabedaten durchgeführt. Dem Fachmann sind die Begriffe Clustering, Segmentierung und Komprimierung im Zusammenhang mit Machine Learning Verfahren bekannt.

In einer bevorzugten Ausführungsform umfasst der Unsupervised Learning Algorithmus bevorzugt die Hauptkomponentenanalyse (Principal Component Analysis (PCA)) und/oder den K-Means-Algorithmus und/oder mindestens ein neuronales Netz.

Wie schon beschrieben werden in beiden oben benannten Verfahren in einem ersten Schritt sogenannte Trainingsprozesse zum Ermitteln von optimalen Parametern einer o.g. Machine Learning Funktion durchgeführt. Anhand der angepassten Funktion werden nach dem Training verschiedene Aussagen für vorher unbekannte Eingabedaten getätigt.

In einer weiteren bevorzugten Variante wird das Verfahren des Reinforcement Learning für die Analyse oder Verarbeitung der Auditierungsinformation genutzt. Beim Reinforcement Learning (Lernen durch Verstärkung) Verfahren findet hingegen der Trainingsprozess kontinuierlich auch nach Anpassung der Parameter einer Funktion statt. Über "Trial and Error" werden Auswirkungen verschiedener Aussagen anhand der angepassten Funktion für bisher unbekannte Eingabedaten beobachtet und bewertet. Als Reaktion auf diese Aussagen erhält der Algorithmus ein Feedback, bevorzugt abstrakt dargestellt in Form einer Belohnung oder Bestrafung. Woraufhin der Algorithmus die Funktion anhand ihrer Parameter weiter optimiert. Dementsprechend passt der Algorithmus die Funktion des Machine Learning Verfahrens kontinuierlich an bzw. verändert diesen.

In einer bevorzugten Ausführungsform umfasst das Verfahren des Reinforcement Learning die Q-Learning Methode und/oder o.g. neuronale Netze und/oder weitere neuronale Netze sowie weitere für den Fachmann bekannte Algorithmen.

In einer weiteren bevorzugten Ausführungsform ist das System dadurch gekennzeichnet, dass die Auditoreinrichtung dazu eingerichtet ist einen Signaturvorgang zu initiieren, wobei der Signaturvorgang abhängig von einem Auslösungsereignis eingeleitet wird und dafür vorgesehen ist der Signiereinrichtung eine Nachricht über das Auslösungsereignis bereitzustellen. Die Signiereinrichtung ist vorzugsweise Bestandteil des Systems.

In einer weiteren bevorzugten Ausführungsform ist das System dadurch gekennzeichnet, dass das System eine Signiereinrichtung umfasst und die Auditoreinrichtung dazu eingerichtet ist, einen Signaturvorgang zu initiieren, wobei der Signaturvorgang abhängig von einem Auslösungsereignis eingeleitet wird und dafür vorgesehen ist
- der Auditoreinrichtung eine manipulationssichere Bestätigung der Signiereinrichtung über die Kenntnisnahme des Auslösungsereignisses bereitzustellen und/oder
- der Auditoreinrichtung eine manipulationssichere Freigabe der Signiereinrichtung für eine Fortführung oder einen Abbruch der kontrollierten Bearbeitung, Überwachung und Abrechnung zur Entsorgung von Müll bereitzustellen.

Durch eine solche Anordnung wird vorteilhaft sichergestellt, dass die Auditoreinrichtung des Systems eine manipulationssichere Reaktion auf ein Auslösungsereignis einer zuständigen Stelle und/oder Person erhält, wobei die Reaktion unter Umständen nur in einer Bestätigung eines Erhalts der Nachricht über das Auslösungsereignis vorliegen kann. Aufgrund der Reaktion leitet die Auditoreinrichtung bevorzugt nachfolgende Prozessschritte ein bzw. erzeugt neue Auditierungsinformationen. Der Signaturvorgang - vorliegend auch als digitale Signatur bezeichnet - dient der Authentifizierung digitaler Nachrichten und bestätigt, dass Nachrichten von einer bekannten Quelle sowie während der Übertragung nicht geändert wurden. Digitale Signaturen können zur Authentifizierung der Nachrichtenquelle verwendet werden. Das heißt sowohl für die Auditoreinrichtung als auch für die Signiereinrichtung kann sichergestellt werden, dass die erhaltenen Nachrichten/Mitteilungen/Vorgabewerte/Anweisungen vom rechtmäßigen Absender generiert wurden. Die Bedeutung eines hohen Vertrauens in die Absenderauthentizität ist zum Beispiel für sensible Daten wie Abbrechungsdaten, Unfallsituationen der Arbeitsstation offensichtlich.

Ferner ist ein wichtiger Aspekt der Definition digitaler Signaturen die Unwiderruflichkeit. Dank dieser Eigenschaft kann eine Instanz - bevorzugt die Signiereinrichtung aber auch die Auditoreinrichtung -, die Informationen signiert hat, zu einem späteren Zeitpunkt nicht abstreiten, diese signiert zu haben. Digitale Signaturen liefern zusätzlich Nachweise zur Herkunft, zur Identität und zum Status eines elektronischen Dokuments und können die vertragliche Einwilligung eines Unterzeichners bestätigen

In einem Ausführungsbeispiel kann die durch die Erfassungseinrichtung ermittelte Entsorgungsobjektinformation über einen zulässigen definierten Bereich vom Vorgabewert abweichen. Der Vorgabewert kann dabei bevorzugt die (voraussichtliche) Entsorgungsobjektart und/oder die (voraussichtliche) Entsorgungsobjektmenge umfassen. Eine derartig auftretende Diskrepanz kann als ein Auslösungsereignis behandelt werden, worauf folgend der Nutzer/Kunde (als Signiereinrichtung) informiert werden kann. Durch den initiierten Signaturvorgang erhält die Auditoreinrichtung eine manipulationssichere Rückmeldung, dass der Nutzer die Nachricht über eine falsche Angabe der Müllmenge und/oder Art erhalten hat. Insbesondere kann dadurch vorteilhaft - auch im Nachhinein - belegt werden, dass der Kunde bzw. Nutzer diese Information erhalten hat und unter Umständen, um eine Erhöhung der Kosten informiert wurde. Weiterhin besteht die Möglichkeit, dass der Kunde bzw. Nutzer in direkter Weise auf das Auslösungsereignis reagieren kann und der Auditoreinrichtung eine Erlaubnis (bspw. als neuen Vorgabewert) für den Fortgang der Entsorgung des Mülls erteilt und/oder der Auditoreinrichtung einen Abbruch des Vorganges mitteilt.

Bevorzugt ist ein Auslösungsereignis eine unvorhergesehene Situation bzw. Ereignis, wie zum Beispiel eine Abweichung oder Diskrepanz zwischen einem Vorgabewert und einem real aufgenommenen Wert (bspw. über die Erfassungseinrichtung). Diese Diskrepanz bzw. Auslösungsereignis wird bevorzugt anhand der Auditierungsinformation von der Auditoreinrichtung erkannt. Das Auslösungsereignis tritt bevorzugt ein, wenn eine geplante vorvereinbarte Durchführung nicht möglich ist und situationsbedingt neue Anforderungen gestellt werden. Das Auslösungsereignis kann auch anhand weiter oben beschriebener Algorithmen der künstlichen Intelligenz ermittelt werden.

In einer weiteren Ausführungsform kann das Auslösungsereignis bevorzugt als ein geplantes Ereignis definiert sein. Zum Beispiel kann eine Dokumentation eines Prozessfortschritts an vordefinierten Verfahrenspunkten an einen Kunden bzw. Nutzer übermittelt werden. Wohingegen der Nutzer (über eine Signiereinrichtung) eine Signatur mit einer Bestätigung über den Erhalt einer Information an einem Verfahrenspunkt übermittelt.

In einer weiteren bevorzugten Ausführungsform kann der Signaturvorgang automatisch aufgrund eines Auslösungsereignisses initiiert werden oder aber auch manuell aufgrund einer externen Eingabe bspw. eines Vorgabewertes für die Auditoreinrichtung initiiert werden.

Im Sinne der Erfindung bedeutet der Begriff "manipulationssicher" bevorzugt das die Integrität übertragener Daten beibehalten wird und auch die Authentizität der Einrichtung, welche die Daten überträgt, sichergestellt wird. Daten, die mit einer digitalen Signatur übermittelt werden können im Sinne der Erfindung als manipulationssicher gelten. Weiterhin kann auch die Auditoreinrichtung Nachrichten mit einer digitalen Signatur übermitteln, sodass die an die Signiereinrichtung übermittelte Nachricht ebenfalls bevorzugt manipulationssicher ausgestaltet ist.

Im Sinne der Erfindung kann eine Signiereinrichtung bevorzugt als eine Vorrichtung oder ein Endgerät ausgestaltet sein, welches einer zuständigen Person (einem Nutzer/Kunden) bzw. einem Signierer und/oder einer zuständigen Stelle (bspw. Leitstelle eines Entsorgungsunternehmens oder aber auch einer Feuerwehrstation) zugeordnet ist. Eine derartige Signiereinrichtung kann beispielsweise ein Smartphone, Mobiltelefon, Tablet-PC, Desktop-PC, Laptop, allg. eine internetfähige Vorrichtung sein, mit einem darauf installierten Computerprogrammprodukt, welches dazu eingerichtet ist, digitale Signaturen zu erstellen und zu versenden sowie erhalten und zu entschlüsseln. Bevorzugt umfasst die Signiereinrichtung ebenfalls ein Sicherheitsmodul.

Die Datenübertragung zwischen Signiereinrichtung und Auditoreinrichtung kann bevorzugt über einen dezentralen Server und/oder über Internetkommunikation erfolgen, wobei die Datenübertragung insbesondere über integrierte Sicherheitsmodule kryptographisch abgesichert werden.

In einer weiteren bevorzugten Ausführungsform ist das System dadurch gekennzeichnet, dass die Auditoreinrichtung dazu eingerichtet ist,
(i) einen Anforderungsdatensatz, umfassend ein erstes elektronisches Dokument und eine Signaturanforderung, zu erzeugen
(ii) den Anforderungsdatensatz an eine Signiereinrichtung zu übermitteln und wobei eine Signiereinrichtung dazu eingerichtet ist,
(iii) einen Antwortdatensatz zu erzeugen, der das erste und/oder ein zweites elektronisches Dokument sowie eine elektronische Signatur umfasst
(iv) den Antwortdatensatz an die Auditoreinrichtung zu übermitteln

Ein elektronisches Dokument weist bevorzugt Daten auf ausgesucht aus der Gruppe umfassend Standortdaten, Fahrzeugdaten, personenbezogene Daten, Audiodaten, Bilddaten, Textdaten und/oder Videodaten. Diesbezüglich sind die im elektronischen Dokument umfassten Daten bevorzugt Daten, die sich auf das Auslösungsereignis beziehen.

Der Anforderungsdatensatz wird bevorzugt automatisch durch die Auditoreinrichtung generiert nachdem ein Auslösungsereignis eingetretenen ist und/oder eine manuelle Eingabe als Vorgabewert getätigt wurde. Der Anforderungsdatensatz kann neben dem ersten elektronischen Dokument und der Signaturanforderung ebenfalls eine Signatur der Auditoreinrichtung umfassen. Dies ermöglicht vorteilhaft das manipulationssichere Bereitstellen einer Information über das Auslösungsereignis.

Der Signaturanforderung des Anforderungsdatensatzes ist eine durch die Auditoreinrichtung vorgebbare Signaturvorgabe umfasst, welche eine Mindestsicherheitsstufe definiert, welche die elektronische Signatur der Signiereinrichtung über dem elektronischen Dokument mindestens aufweisen muss. Durch die Signaturvorgabe kann die Auditoreinrichtung in vorteilhafter Weise bereits eine entsprechende Vorgabe hinsichtlich der aus ihrer Sicht mindestens erforderlichen Sicherheitsstufe der angeforderten Signatur machen, welche dann automatisch ohne weiteren Eingriff bzw. weitere diesbezügliche Eingaben der Signiereinrichtung verarbeitet werden kann. Hierdurch kann der Signaturprozess erheblich beschleunigt und vereinfacht werden. Dies ist in hohem Maße vorteilhaft für die Nutzerakzeptanz.

In einer weiteren bevorzugten Ausführungsform sind für die elektronische Signatur wenigstens zwei Signaturstufen mit unterschiedlichen Sicherheitsstufen der elektronischen Signatur vorgegeben und die Signaturanforderung eine durch die Auditoreinrichtung vorgebbare Signaturvorgabe umfasst, welche eine Mindestsicherheitsstufe definiert, welche die elektronische Signatur der Signiereinrichtung über dem elektronischen Dokument mindestens aufweisen muss.

Beispielsweise sind zwei Signaturstufen bevorzugt in fortgeschrittene elektronische Signatur und die qualifizierte elektronische Signatur zu unterscheiden. Erstere ist auch als *Advanced Electronic Signature* oder kurz AES bekannt. Hierbei stellt die qualifizierte elektronische Signatur (QES) die höchste Sicherheitsstufe dar. Sie verfügt zum einen über sämtliche Eigenschaften, die auch die AES auszeichnet, und darüber hinaus über weitere Sicherheitskriterien.

In einer bevorzugten Ausführungsform umfasst der Antwortdatensatz die manipulationssichere Bestätigung der Signiereinrichtung über den Erhalt der Informationen über das Auslösungsereignis. Die Bestätigung kann sich in der Art ausgestalten, dass das übermittelte elektronisches Dokument an die Signiereinrichtung mit einer Signatur der Signiereinrichtung versehen wird und an die Auditoreinrichtung zurückgesendet wird. Die einfache Bestätigung übermittelt in anderen Worten der Auditoreinrichtung Information einer Kenntnisnahme der Signiereinrichtung.

In einer weiteren bevorzugten Ausführugnsform kann auch ein zweites digitales Dokument von der Signiereinrichtung erzeugt werden, welches mit einer Signatur versehen wird und an die Auditoreinrichtung übermittelt wird. Dieses zweite Dokument kann Reaktionsdaten mit Anweisungen für das weitere Vorgehen umfassen, wie zum Beispiel eine Freigabe, für die Fortführung des Entsorgungsprozesses oder den Abbruch des Prozesses.

In einer weiteren bevorzugten Ausführungsform der Erfindung ist das System dadurch gekennzeichnet, dass die Arbeitsstation, insbesondere ein Druckstempel, dazu eingerichtet ist im Arbeitsprozess das Entsorgungsobjekt zusammenzupressen, wobei der Druckstempel einen Verfahrweg zurücklegt bis ein Arbeitsdruck erreicht ist. Dies wirkt sich positiv auf den Verschleiß der Arbeitsstation aus, da ein definierter Arbeitsdruck nicht überschritten wird. Zudem wird hierdurch ein Schaden durch Überlast an der Presse verhindert.

Im Sinne der Erfindung ist die Arbeitsstation bevorzugt ein Teil einer Presse. Vorzugsweise handelt es sich um eine hydraulische Müllpresse, wobei der Druckstempel innerhalb eines Containers verfahrbar gelagert ist. Hydraulische Pressmaschinen arbeiten nach dem hydrostatischen Prinzip. Das hydrostatische Prinzip ist dem Fachmann bekannt. Der Vorteil einer solchen hydraulischen Presse ist das hohe Kräfte in die Presse eingebracht werden können.

Erfindungsgemäß weist die Presse mindestens einen hydraulisch angetriebenen Druckstempel auf. Dieser Druckstempel verfährt auf einem Verfahrweg in Richtung eines Gegenstücks, wobei das Gegenstück bevorzugt eine wandähnliche Struktur aufweist. Im Sinne der Erfindung ist das Gegenstück bevorzugt eine Containerwand. In einer alternativen Ausführungsform ist das Gegenstück ebenfalls als ein Druckstempel ausgestaltet.

Im Sinne der Erfindung weist die Arbeitsstation bevorzugt einen Schlitten und Schienen auf. In einer bevorzugten Ausgestaltung ist der Druckstempel über den Schlitten in einem Freiheitsgrad beweglich auf den Schienen gelagert. Zwischen dem Schlitten und den Schienen ist relativ zueinander eine Verschiebung möglich. So wird in einer Ausführungsform bevorzugt der Schlitten, auf dem der Druckstempel angebracht ist, auf den Schienen bewegt. Vorteilhaft wird bei der Bewegung wenig Reibung aufgebracht.

Im Sinne der Erfindung ist der Arbeitsdruck bevorzugt der Druck, der in der Presse durch das Verfahren des Pressstempels zum Verpressen des Entsorgungsobjekts aufgebracht wird. In einer alternativen Ausführungsform wird ein maximaler Arbeitsdruck als Schwellenwert aufgrund der Auditierungsinformation der Steuerungseineinrichtung vorgegeben. Bei Erreichen des Schwellenwerts, was durch die Erfassungseinheit detektiert wird, wird der Druckstempel wieder in seine Ausgangsposition zurückgefahren. Der Schwellenwert wirkt sich vorteilhaft auf den Verschleiß aus und vermeidet Schäden aufgrund von Überlastung.

In einer weiteren bevorzugten Ausführungsform der Erfindung ist das System dadurch gekennzeichnet, dass die Erfassungseinheit dazu eingerichtet ist, den Verfahrweg und/oder den Arbeitsdruck durch den Druckstempel zu ermitteln und das Sicherheitsmodul dazu eingerichtet ist die aufgenommenen Daten abzuspeichern. Die Speicherung der Daten bringt den Vorteil mit sich, dass Fehler, die im System vorgelegen haben, nach einem Arbeitsprozess nachvollzogen und identifiziert werden können.

Die Erfassungseinheit weist hierbei bevorzugt einen Wegsensor bzw. Abstandsensor auf. Ein Wegsensor ist bevorzugt ein Gegenstand ausgesucht aus der Gruppe (ohne auf diese beschränkt zu sein) umfassend: Laserentfernungsmesser, RADAR-Sensor, Ultraschallsensor, Inkrementalgeber, Seilzuglängengeber, Bildsensor etc. Dem Fachmann sind die Wegsensoren bekannt.

Die Erfassungseinheit weist hierbei bevorzugt einen Drucksensor auf. Ein Drucksensor ist bevorzugt ein Gegenstand ausgesucht aus der Gruppe (ohne auf diese beschränkt zu sein) umfassend: piezoresistiver Drucksensor, piezoelektrischer Drucksensor, Hallelement-Drucksensor, kapazitiver Drucksensor, induktiven Drucksensor etc. Dem Fachmann sind diese Drucksensoren bekannt.

In einer weiteren bevorzugten Ausführungsform der Erfindung ist das System dadurch gekennzeichnet, dass die Steuerungseinrichtung dazu eingerichtet ist den Verfahrweg und/oder den Arbeitsdruck durch den Druckstempel auf Basis der Auditierungsinformation festzulegen. Hierdurch kann vorteilhaft ein individueller Arbeitsprozess zur Bearbeitung eines Entsorgungsobjekts durchgeführt werden.

Erfindungsgemäß übermittelt die Auditoreinrichtung einen SOLL-Wert, welcher auf der Auditierungsinformation basiert, an die Steuerungseinrichtung. Die Steuerungseinrichtung gibt dem Druckstempel die Anweisung, dass dieser von einem IST-Wert bzw. eine IST-Zustand im Hinblick auf einen Verfahrweg und/oder Arbeitsdruck einen SOLL-Wert bzw. SOLL-Zustand erreichen soll. Der IST-Wert bzw. IST-Zustand entspricht dabei einen Wert oder einen Zustand zu einem Zeitpunkt vor oder während des Arbeitsprozesses. Der SOLL-Wert bzw. SOLL-Zustand entspricht dabei einem Wert oder einem Zustand zu einem im Vergleich zum IST-Wert späteren Zeitpunkt.

In einer weiteren bevorzugten Ausführungsform der Erfindung ist das System dadurch gekennzeichnet, dass die Zustandsinformation ausgewählt ist aus der Gruppe umfassend (Umgebungs-) Temperatur, Sonneneinstrahlung, (Luft-) Druck, (Luft-) Feuchtigkeit und/oder LuftVerunreinigung.

Es ist im Sinne der Erfindung bevorzugt, dass die Zustandsinformationen diejenigen Parameter beschreiben, die von außen auf das System, dessen Komponente oder die Arbeitsstation einwirken. Dabei kann es sich zum Beispiel um eine Temperatur in einem Raum handeln, in dem die Arbeitsstation aufgestellt ist. Es kann sich zum Beispiel auch um eine Luftfeuchtigkeit, einen Umgebungsdruck, eine Tageszeit, eine Helligkeit usw. handeln, ohne darauf beschränkt zu sein.

In einer weiteren bevorzugten Ausführungsform der Erfindung ist das System dadurch gekennzeichnet, dass die Betriebsinformation ausgewählt ist aus der Gruppe umfassend (Anlagen-)Temperatur, Betriebsmittel-Füllstand, (Betriebs-) Kräfte, (Betriebs-) Drücke und/oder Anlagengröße. Die Begriffe Betriebsparameter und Betriebsinformation werden bevorzugt als Synonym verwandt und beschreiben bevorzugt eine (system) interne Größe.

In einer weiteren bevorzugten Ausführungsform der Erfindung ist das System dadurch gekennzeichnet, dass die Entsorgungsobjektinformation ausgewählt ist aus der Gruppe umfassend Objektabbild, Objektgröße, Objekttemperatur, Objektdichte, Objektoberfläche und/oder Müllart, beispielsweise Grünschnitt, Sperrmüll, Plastikmüll, Altglas, Restmüll, Altpapier und/oder Elektronikschrott.

Im Sinne der Erfindung ist ein Objektabbild bevorzugt eine Abbildung eines Objekts oder Teilen hiervon, insbesondere des Entsorgungsobjekts und/oder des Erzeugnisses. Eine Abbildung ist bevorzugt ein digitales Foto. Ein Foto kann vorteilhaft mit nur einer Erfassungseinrichtung (umfassend bevorzugt eine Kamera) aufgenommen werden und weist eine Vielzahl von Informationen auf.

In einer weiteren bevorzugten Ausführungsform der Erfindung ist das System dadurch gekennzeichnet, dass das Sicherheitsmodul dazu eingerichtet ist einen Entsorgungsweg, einen Entsorgungsort, einen Entsorgungszeitpunkt und/oder die Art des bereitgestellten Entsorgungsobjektes und/oder des Erzeugnisses zu speichern. Der Vorteil einer solchen Speicherung ist der rückwirkende Zugriff auf die Daten, wobei sie durch das Sicherheitsmodul mit höchsten Sicherheitsstandards gesichert sind, sodass die Daten vor Manipulation oder widerrechtlicher Entnahme geschützt sind.

Der Entsorgungsweg ist erfindungsgemäß eine Strecke, die bevorzugt einen Startpunkt an dem Ort hat, an dem das Entsorgungsobjekt bereitgestellt wird. Der Endpunkt dieser Strecke ist der Ort, an dem das Erzeugnis entsorgt wird. Der Endpunkt ist dementsprechend bevorzugt auch der Entsorgungsort. Der Zeitpunkt an dem das Erzeugnis am Entsorgungsort entsorgt wird, ist im Sinne der Erfindung der Entsorgungszeitpunkt.

In einer weiteren bevorzugten Ausführungsform der Erfindung ist das System dadurch gekennzeichnet, dass die Erfassungseinrichtung einen optischen Sensor, bevorzugt eine Kamera umfasst, und die Auditoreinrichtung und/oder Erfassungseinrichtung dazu eingerichtet ist die Erzeugnisinformation über Computeralgorithmen, bevorzugt mittel künstlicher Intelligenz, zu analysieren. Die computerbasierte Analyse der erfassten Erzeugnisinformation, wie beispielsweise aufgenommene Bildinformationen des Erzeugnisses, erlaubt detailliertere und bessere Ergebnisse, im Vergleich zu einer manuellen Analyse von Bildern. Zudem lässt sich die Analyse einfach in den Ablauf des Systems integrieren.

Als optische Sensor bzw. Bildsensor können verschiedene Sensoren eingesetzt werden, welche bevorzugt Licht unter Ausnutzung des photoelektrischen Effekts in ein elektrisches Signal umwandeln oder einen von der einfallenden Strahlung abhängigen elektrischen Widerstand zeigt. Geeignete optische Sensoren bzw. Bildsensoren können beispielsweise ausgesucht sein, aus einer Gruppe umfassend: Photozelle, Photomultiplier, Mikrokanalplatte-Multiplier, CMOS-Sensoren, CCD-Sensoren, Photodioden, Phototransistoren etc. Dem Fachmann sind diese Sensoren bekannt. Besonders bevorzugt weist die Erfassungseinrichtung eine Kamera mit CCD-Sensoren auf. Diese ist besonders wirtschaftlich und liefert im Hinblick auf die folgende Auswertung qualitativ hinreichend informationsreiche Bilder.

In einer bevorzugten Ausführungsform werden die obig beschriebenen Verfahren des Supervised Learning, insbesondere ein künstliches Neuronales Netz, ebenfalls für die Analyse der Erfassungsinformation genutzt. Es handelt sich dabei ebenso bevorzugt um eine Klassifizierung. Im Sinne der Erfindung sind die Eingabedaten bevorzugt durch die Erfassungsinformation definiert. Diese kann beispielsweise ein Bild des Erzeugnisses sein. Erfindungsgemäß sind Zieldaten bevorzugt durch die Einordnung der Erfassungsinformation in eine bestimmte Klasse definiert. Ebenso können auch Wahrscheinlichkeiten für die Zugehörigkeit in einer bestimmten Klasse als Zieldaten ausgegeben werden. Somit sind die Zieldaten bzw. der Output in Anbetracht des Beispiels, eine Einordnung in eine bestimmte Müllart beispielsweise Plastikmüll

Es können jedoch auch Verfahren des Unsupervised Learning und Reinforcement Learning genutzt werden.

In einer weiteren bevorzugten Ausführungsform der Erfindung ist das System dadurch gekennzeichnet, dass das System eine GPS-Ortungseinheit umfasst, welche dazu eingerichtet ist den Entsorgungsweg und -ort zu ermitteln und das Sicherheitsmodul eine integrierte Echtzeituhr aufweist, welche dazu eingerichtet ist den Entsorgungszeitpunkt zu ermitteln. Dies ermöglicht vorteilhaft die genaue Angabe einer erbrachten Leistung für die Entsorgung eines Entsorgungsobjekts. Insbesondere ist es durch die GPS-Ortungseinheit möglich den Entsorgungsweg des Entsorgungsobjekts innerhalb einer Müllentsorgungsanlage zwischen dem Annahmeort, verschiedenen Arbeitsstationen, insbesondere der Pressstation, Sortieranlage etc., und einem Lagerungsort örtlich und zeitlich zu verfolgen. Auch ein Nachvollziehen des Entsorgungsweges in Bezug auf eine transportfähige Müllpresse ist möglich. Hierdurch kann beispielsweise der Entsorgungsweg anhand der erbrachten Kilometer in Rechnung gestellt werden. Auch eine Berücksichtigung etwaiger Mautgebühren, welche auf dem Entsorgungsweg anfallen, ist möglich.

Eine GPS-Ortungseinheit ist dem Fachmann bekannt. Die ermittelten Orts- sowie Zeitdaten werden erfindungsgemäß in einer der Systemkomponenten gespeichert.

Neben dem vorgeschlagenen System ist ein analoges Verfahren, welches bevorzugt mittels des Systems ausführbar ist, ebenfalls Inhalt der Erfindung.

In einem weiteren Aspekt der Erfindung ist ein Verfahren zur kontrollierten Bearbeitung, Überwachung und Abrechnung von Müllentsorgung dadurch gekennzeichnet, dass
a) ein Entsorgungsobjekt, nämlich Müll, bereitgestellt wird;
b) ein Vorgabewert von einem dezentralen Server an eine Auditoreinrichtung übermittelt wird;
c) eine Erfassungseinrichtung mindestens eine Entsorgungsobjektinformation und/oder eine Betriebsinformation und/oder eine Zustandsinformation erfasst;
d) die Entsorgungsobjektinformation und/oder die Betriebsinformation und/oder Zustandsinformation an die Auditoreinrichtung übermittelt wird;
e) eine Auditierungsinformation durch die Auditoreinrichtung auf Basis der Entsorgungsobjektinformation der Betriebsinformation und/oder der Zustandsinformation sowie dem Vorgabewert erstellt wird;
f) eine Steuerungseinrichtung eine Arbeitsstation steuert und einen Arbeitsprozess zur Bearbeitung des Entsorgungsobjekts in Abhängigkeit der Auditierungsinformation startet und/oder regelt;
g) ein durch den Arbeitsprozess erhaltendes Erzeugnis über die Erfassungseinrichtung erfasst wird und die daraus resultierende Erzeugnisinformation an die Auditoreinrichtung übermittelt wird;
h) die Auditierungsinformation mit der Erzeugnisinformation ergänzt wird und darauf basierend eine Abrechnungsinformation generiert wird;
wobei einer oder mehrere Datenübertragungsprozesse durch mindestens ein Sicherheitsmodul kryptografisch abgesichert durchgeführt werden.

Definitionen, bevorzugte Ausführungsformen oder vorteilhafte Wirkungen, die hinsichtlich des vorgeschlagenen Systems beschrieben wurden, gelten für das vorgeschlagene Verfahren analog, und umgekehrt.

In einer weiteren bevorzugten Ausführungsform ist das Verfahren dadurch gekennzeichnet, dass die Auditoreinrichtung bei Auftreten eines Auslösungsereignisses einen Signaturvorgang initiiert, wobei die Auditoreinrichtung einer Signiereinrichtung eine Nachricht über das Auslösungsereignis übermittelt und/oder eine Signiereinrichtung der Auditoreinrichtung eine manipulationssichere Bestätigung über die Kenntnisnahme des Auslösungsereignisses übermittelt und/oder eine Signiereinrichtung der Auditoreinrichtung eine manipulationssichere Freigabe für eine Fortführung oder einen Abbruch der kontrollierten Bearbeitung von Müll übermittelt.

Ein derartiges Verfahren ermöglicht vorzugsweise eine direkte Rückwirkung auf die Auditoreinrichtung über eine Signiereinrichtung, so könnte z.B. bei sicherheitsrelevanten Vorkommnissen ein Systemstopp veranlasst werden oder eine rechtsverbindliche Kenntnisnahme übermittelt werden. In einerweiteren bevorzugten Ausführungsform der Erfindung ist das Verfahren dadurch gekennzeichnet, dass die Abrechnungsinformationen auf der Analyse der Auditierungsinformation basieren.

In einer weiteren bevorzugten Ausführungsform der Erfindung ist das Verfahren dadurch gekennzeichnet, dass das Erzeugnis, bevorzugt durch eine färbende und/oder fluoreszierende Flüssigkeit, gekennzeichnet wird. Der Vorteil einer Kennzeichnung des Erzeugnisses ermöglicht es in einer gleichen Müllpresse mehrere Entsorgungsobjekte zu bearbeiten und im Nachhinein trotzdem eine Zuordnung zu einem Nutzer herzustellen.

In einer bevorzugten Ausführungsform wird die Kennzeichnung durch eine Markierstation erstellt. Die Markierstation umfasst bevorzugt Mittel für das Aufbringen eine färbenden und/oder fluoreszierenden Flüssigkeit. Besonders bevorzugt wird die Flüssigkeit durch Sprühen auf dem Erzeugnis aufgetragen. In einer Alternative wird die Flüssigkeit bevorzugt durch Streichen aufgetragen.

In einer bevorzugten Ausführungsform der Erfindung werden mehrere Entsorgungsobjekte in einem System nacheinander bearbeitet. Nach Erstellen eines ersten Erzeugnisses wird dieses gekennzeichnet und alle wesentlichen Informationen durch die Erfassungseinrichtung erfasst. Anschließend wird dem System ein zweites Entsorgungsobjekt bereitgestellt, dementsprechend ein zweites Erzeugnis erstellt und alle wesentlichen Informationen durch die Erfassungseinrichtung erfasst. Die Auditoreinrichtung ist dazu eingerichtet die erfasste Information der Erfassungseinrichtung über Machine Learning Verfahren so auszuwerten, dass die einzelnen Erzeugnisse den einzelnen Nutzern zugeordnet werden können.

In einer weiteren Ausführungsform der Erfindung werden die Erzeugnisse durch eine Trennwand gekennzeichnet. Die Trennwand weist bevorzugt im Vergleich zum Erzeugnis ein unterschiedliches Material auf und soll das Erzeugnis von einem räumlich gesehen dahinter liegenden neuem Entsorgungsobjekt trennen. Die Erfassungseinrichtung ist dazu eingerichtet die Kennzeichnungen zu erfassen und an die Auditoreinrichtung zu übermitteln.

In einer weiteren bevorzugten Ausführungsform ist die Kennzeichnung wärmebasiert. So kann beispielsweise Müll anhand einer Heizstation verschmelzt werden, um als Trennwand zu fungieren.

### FIGUREN

Im Folgenden soll die Erfindung an Hand von Figuren näher erläutert werden, ohne auf diese beschränkt zu sein.

### Kurzbeschreibunq der Abbildungen

- Fig. 1: Schaublid eines Systems zur kontrollierten Bearbeitung, Überwachung und Abrechnung zur Entsorgung eines Entsorgungsobjekt, nämlich Müll
- Fig. 2: Ablauf eines Verfahrens zur kontrollierten Bearbeitung, Überwachung und Abrechnung zur Entsorgung eines Entsorgungsobjekt, nämlich Müll

### Detaillierte Beschreibung der Abbildungen

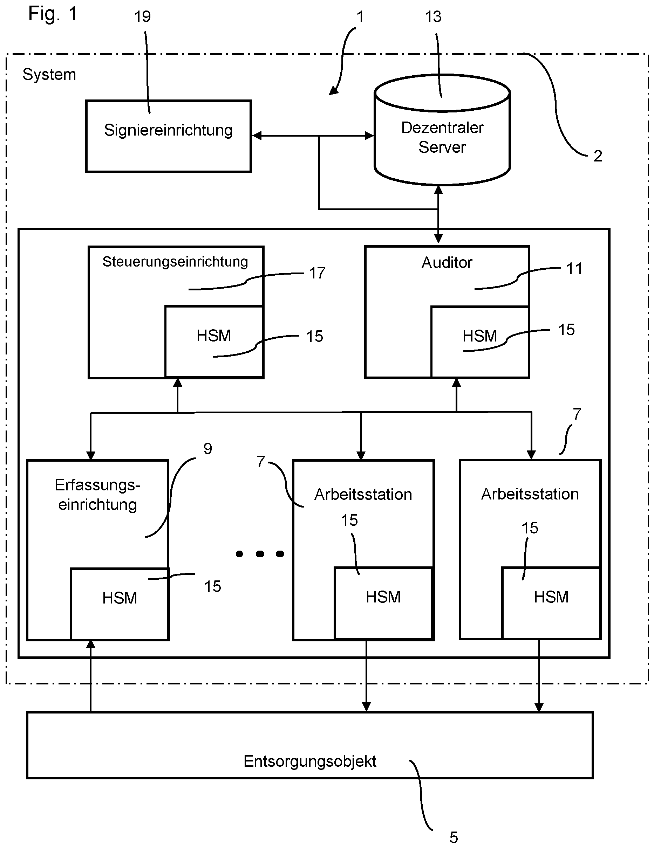

**Fig.1** zeigt schematisch ein System **1,** in dem ein oder mehrere Arbeitsstationen **7** jeweils einen Arbeitsprozess an einem Entsorgungsobjekt **5** durchführen. Beispielhaft kann es sich bei der Arbeitsstation **7** um einen Druckstempel und/oder um eine Markierstation in einer Müllpresse handeln. Das Entsorgungsobjekt **5** wird durch einen Arbeitsprozess zu einem Erzeugnis bearbeitet. Über einen dezentralen Server **13** wird in einem ersten Schritt ein Vorgabewert an die Auditoreinrichtung **11** übermittelt. Die Erfassungseinrichtung **9** hingegen ermittelt eine Betriebsinformation, eine Zustandsinformation, eine Entsorgungsobjektinformation und/oder eine Erzeugnisinformation und sendet diese an die Auditoreinrichtung **11.** Die Auditoreinrichtung **11** erstellt darauf basierend eine Auditierungsinformation und übermittelt sie an die Steuerungseinrichtung **17.** Anhand der Auditierungsinformation steuert und/oder regelt die Steuerungseinrichtung **17** die Arbeitsstation **7.** Der Arbeitsprozess wird so lange fortgesetzt bis ein vordefinierter Schwellenwert (z.B. Arbeitsdruck) erreicht ist, welcher von der Erfassungseinheit **9** erfasst wird. Der gesamte Arbeitsprozess wird bevorzugt von der Erfassungseinheit **9** überwacht. Nachdem das Erzeugnis ebenso anhand von erfassten Informationen der Erfassungseinheit **9** von der Auditoreinrichtung **11** analysiert wurde, können individuelle Abrechnungsinformationen erstellt werden. Diese können von der Auditoreinrichtung **11** bevorzugt an einen dezentralen Server **13** gesendet werden. Vorzugsweise werden in allen Systemkomponenten Sicherheitsmodule (HSM) **15** zur Erhöhung der Sicherheit eingesetzt. Somit werden bevorzugt alle Datenübertragungsprozesse kryptografisch abgesichert durchgeführt. Es versteht sich, dass nicht zwingend alle Datenübertragungsprozesse kryptographisch abgesichert durchgeführt werden müssen. In bevorzugten Ausführungsformen ist es beispielsweise ausreichend, wenn mindestens ein Datenübertragungsprozess kryptographisch abgesichert durchgeführt wird.

Darüber hinaus ist im System **1** bevorzugt eine Signiereinrichtung **19** umfasst. Die Signiereinrichtung **19** steht bevorzugt mit dem dezentralen Server **13** und/oder der Auditoreinrichtung **11** in Datenverbindung. Es ist dabei besonderes bevorzugt, dass die Auditoreinrichtung **11** in Datenkommunikation mit der Signiereinrichtung **19** steht, wobei die Auditoreinrichtung **11** ein Auslösungsereignis erkennen kann. Nach einem Auslösungsereignis sendet die Auditoreinrichtung **11** bevorzugt einen Anforderungsdatensatz mit einer Signaturanforderung an die Signiereinrichtung **19.** Die Signiereinrichtung **19** generiert hingegen als Reaktion auf die Signaturanforderung bevorzugt einen Antwortdatensatz mit einer elektronischen Signatur. Der Antwortdatensatz wird bevorzugt der Auditoreinrichtung **11** bereitgestellt.

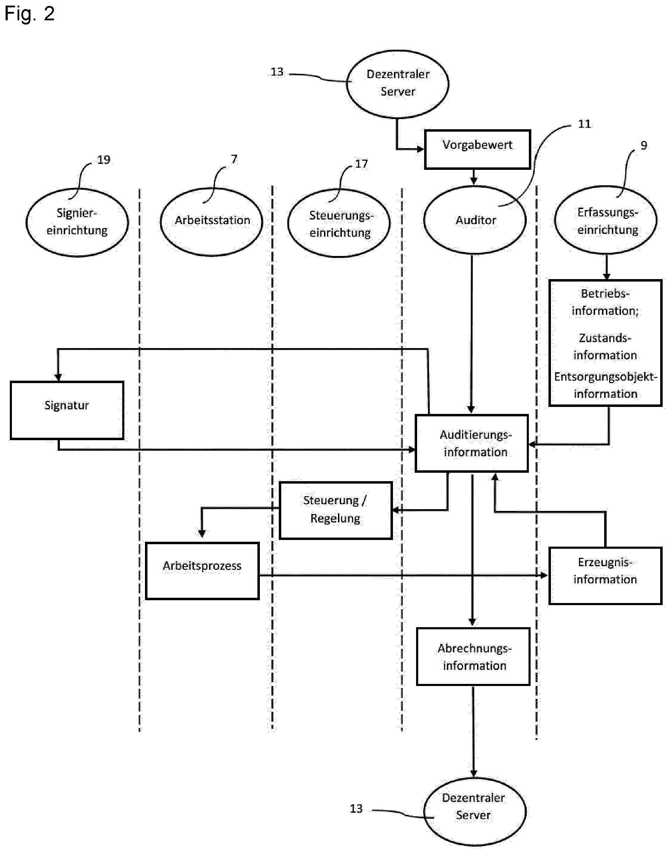

**Fig. 2** stellt beispielhaft einen Flow an vom System **1** vorgenommen Schritten vor. Ein Entsorgungsobjekt **5** liegt im System **1** vor. In einem ersten Schritt wird ein Vorgabewert in einem dezentralen Server **13** bereitgestellt. Der Vorgabewert wird an eine Auditoreinrichtung **11** übermittelt. Überdies erfasst eine Erfassungseinrichtung **9** eine Betriebsinformation, eine Zustandsinformation und/oder eine Entsorgungsobjektinformation. Die Auditoreinrichtung **11** generiert aus dem Vorgabewert und den erfassten Informationen der Erfassungseinrichtung **9** eine Auditierungsinformation. Auf Basis der Auditierungsinformation steuert und/oder regelt eine Steuerungseinrichtung **17** eine Arbeitsstation **7.** Die Arbeitsstation wandelt das Entsorgungsobjekt **5** zu einem Erzeugnis um, woraufhin eine Erzeugnisinformation durch die Erfassungseinrichtung **9** erfasst wird. Die Erzeugnisinformation wird anschließend an die Auditoreinrichtung **11** übermittelt. Die Auditoreinrichtung **11** ergänzt die Auditierungsinfomation mit der Erzeugnisinformation und generiert darauf basierend eine Abrechnungsinformation. Diese wiederum kann einem dezentralen Server **13** bereitgestellt werden. Alle Datenübertragungsprozesse werden durch mindestens ein Sicherheitsmodul (HSM) **15** kryptografisch abgesichert durchgeführt.

Die Auditoreinrichtung **11** kann anhand der Auditierungsinformation bevorzugt ein Auslösungsereignis erkennen. Der Informationsgehalt des Auslösungsereignisses wird bevorzugt an eine Signiereinrichtung **19** übermittelt. Es ist dabei bevorzugt vorgesehen, dass eine Signiereinrichtung **19,** welche beispielsweise durch ein Endgerät eines Kunden definiert sein kann, eine manipulationssichere Bestätigung über den Erhalt einer Information an die Auditoreinrichtung **11** übermittelt. Eine solche manipulationssichere Bestätigung kann bevorzugt durch eine digitale Signatur erhalten werden. Aufgrund der Bestätigung kann die Auditierungsinformation überarbeitet werden und daraufhin eine Abrechnungsinformation erstellt werden und/oder eine angepasste Steuerung bzw. Regelung der Arbeitsstation **7** erfolgen.

### Bezugszeichenliste

- 1: System
- 2: Systemgrenze
- 5: Entsorgungsobjekt
- 7: Arbeitsstation
- 9: Erfassungseinrichtung
- 11: Auditoreinrichtung
- 13: Dezentraler Server
- 15: Sicherheitseinrichtung (HSM)
- 17: Steuerungseinrichtung
- 19: Signiereinrichtung

## Patentansprüche

1. System (1) zur kontrollierten Bearbeitung, Überwachung und Abrechnung zur Entsorgung eines Entsorgungsobjekts (5), nämlich Müll, umfassend mindestens folgende Komponenten: eine Arbeitsstation (7), eine Steuerungseinrichtung (17), ein Sicherheitsmodul (15), eine Erfassungseinrichtung (9), eine Auditoreinrichtung (11), und einen dezentralen Server (13),
**dadurch gekennzeichnet, dass**
a) der dezentrale Server (13) dazu eingerichtet ist einen Vorgabewert an die Auditoreinrichtung (11) zu übermitteln;
b) die Erfassungseinrichtung (9) dazu eingerichtet ist mindestens eine Entsorgungsobjektinformation eines Entsorgungsobjekts (5) und/oder eine Betriebsinformation und/oder eine Zustandsinformation zu erfassen;
c) die Auditoreinrichtung (11) dazu eingerichtet ist eine Auditierungsinformation auf Basis der Entsorgungsobjektinformation und/oder der Betriebsinformation und/oder der Zustandsinformation sowie dem Vorgabewert zu erstellen;
d) die Steuerungseinrichtung (17) dazu eingerichtet ist die Arbeitsstation (7) zu steuern und einen Arbeitsprozess zur Bearbeitung des Entsorgungsobjekts (5) in Abhängigkeit der Auditierungsinformation zu starten und/oder regeln;
e) die Erfassungseinrichtung (9) dazu eingerichtet ist eine Erzeugnisinformation über ein durch den Arbeitsprozess erhaltendes Erzeugnis zu erfassen und diese an die Auditoreinrichtung (11) zu übermitteln;
f) die Auditoreinrichtung (11) dazu eingerichtet ist die Auditierungsinformation mit der Erzeugnisinformation zu ergänzen und darauf basierend eine Abrechnungsinformation zu generieren;
wobei einer oder mehrere Datenübertragungsprozesse durch das Sicherheitsmodul (15) kryptografisch abgesichert durchgeführt werden.

2. System (1) nach Anspruch 1
**dadurch gekennzeichnet, dass**
die Auditoreinrichtung (11) dazu eingerichtet ist, anhand der Auditierungsinformation dem Entsorgungsobjekt (5) und/oder dem Erzeugnis eine Identifikationsinformation zuzuordnen.

3. System (1) gemäß einem oder beiden der vorherigen Ansprüche
**dadurch gekennzeichnet, dass**
das System (1) eine Signiereinrichtung (19) umfasst und die Auditoreinrichtung (11) dazu eingerichtet ist einen Signaturvorgang zu initiieren, wobei der Signaturvorgang abhängig von einem Auslösungsereignis eingeleitet wird und dafür vorgesehen ist,
- der Signiereinrichtung (19) eine Nachricht über das Auslösungsereignis bereitzustellen und/oder
- der Auditoreinrichtung (11) eine manipulationssichere Bestätigung der Signiereinrichtung (19) über die Kenntnisnahme des Auslösungsereignisses bereitzustellen und/oder
- der Auditoreinrichtung (11) eine manipulationssichere Freigabe der Signiereinrichtung (19) für eine Fortführung oder einen Abbruch der kontrollierten Bearbeitung, Überwachung und Abrechnung zur Entsorgung von Müll bereitzustellen.

4. System (1) gemäß einem oder mehreren der vorherigen Ansprüche
**dadurch gekennzeichnet, dass**
die Arbeitsstation (7), insbesondere ein Druckstempel, dazu eingerichtet ist im Arbeitsprozess das Entsorgungsobjekt (5) zusammenzupressen, wobei der Druckstempel einen Verfahrweg zurücklegt bis ein Arbeitsdruck erreicht ist.

5. System (1) gemäß einem oder mehreren der vorherigen Ansprüche
**dadurch gekennzeichnet, dass**
die Erfassungseinheit (9) dazu eingerichtet ist den Verfahrweg und/oder den Arbeitsdruck durch den Druckstempel zu ermitteln und das Sicherheitsmodul (15) dazu eingerichtet ist die aufgenommenen Daten abzuspeichern.

6. System (1) gemäß einem oder mehreren der vorherigen Ansprüche
**dadurch gekennzeichnet, dass**
die Steuerungseinrichtung (17) dazu eingerichtet ist den Verfahrweg und/oder den Arbeitsdruck durch den Druckstempel auf Basis der Auditierungsinformation festzulegen.

7. System (1) gemäß einem oder mehreren der vorherigen Ansprüche
**dadurch gekennzeichnet, dass**
die Zustandsinformation ausgewählt ist aus der Gruppe umfassend (Umgebungs-) Temperatur, Sonneneinstrahlung, (Luft-) Druck, (Luft-) Feuchtigkeit und/oder LuftVerunreinigung.

8. System (1) gemäß einem oder mehreren der vorherigen Ansprüche
**dadurch gekennzeichnet, dass**
die Betriebsinformation ausgewählt ist aus der Gruppe umfassend (Anlagen-)Temperatur, Betriebsmittel-Füllstand, (Betriebs-) Kräfte, (Betriebs-) Drücke und/oder Anlagengröße.

9. System (1) gemäß einem oder mehreren der vorherigen Ansprüche
**dadurch gekennzeichnet, dass**
die Entsorgungsobjektinformation ausgewählt ist aus der Gruppe umfassend Objektgröße, Objekttemperatur, Objektdichte, Objektoberfläche und/oder Müllart, beispielsweise Grünschnitt, Sperrmüll, Plastikmüll, Altglas, Restmüll, Altpapier und/oder Elektronikschrott.

10. System (1) gemäß einem oder mehreren der vorherigen Ansprüche
**dadurch gekennzeichnet, dass**
das Sicherheitsmodul (15) dazu eingerichtet ist einen Entsorgungsweg, einen Entsorgungsort, einen Entsorgungszeitpunkt und/oder die Art des bereitgestellten Entsorgungsobjektes und/oder des Erzeugnisses zu speichern.

11. System (1) gemäß einem oder mehreren der vorherigen Ansprüche
**dadurch gekennzeichnet, dass**
die Erfassungseinrichtung (9) einen optischen Sensor, bevorzugt eine Kamera umfasst, und die Auditoreinrichtung (11) und/oder Erfassungseinrichtung (9) dazu eingerichtet ist die Erzeugnisinformation über Computeralgorithmen, bevorzugt mittel künstlicher Intelligenz, zu analysieren.

12. System (1) gemäß einem oder mehreren der vorherigen Ansprüche
**dadurch gekennzeichnet, dass**
das System (1) eine GPS-Ortungseinheit umfasst, welche dazu eingerichtet ist den Entsorgungsweg und -ort zu ermitteln und das Sicherheitsmodul (15) eine integrierte Echtzeituhr aufweist, welche dazu eingerichtet ist den Entsorgungszeitpunkt zu ermitteln.

13. Verfahren zur kontrollierten Bearbeitung, Überwachung und Abrechnung zur Entsorgung eines Entsorgungsobjekts (5), nämlich Müll
**dadurch gekennzeichnet, dass**
a) ein Entsorgungsobjekt (5), nämlich Müll, bereitgestellt wird;
b) ein Vorgabewert von einem dezentralen Server (13) an eine Auditoreinrichtung (11) übermittelt wird;
c) eine Erfassungseinrichtung (9) mindestens eine Entsorgungsobjektinformation und/oder eine Betriebsinformation und/oder eine Zustandsinformation erfasst;
d) die Entsorgungsobjektinformation und/oder die Betriebsinformation und/oder Zustandsinformation an die Auditoreinrichtung (11) übermittelt wird;
e) eine Auditierungsinformation durch die Auditoreinrichtung (11) auf Basis der Entsorgungsobjektinformation der Betriebsinformation und/oder der Zustandsinformation sowie dem Vorgabewert erstellt wird;
f) eine Steuerungseinrichtung (17) eine Arbeitsstation (7) steuert und einen Arbeitsprozess zur Bearbeitung des Entsorgungsobjekts (5) in Abhängigkeit der Auditierungsinformation startet und/oder regelt;
g) ein durch den Arbeitsprozess erhaltendes Erzeugnis über die Erfassungseinrichtung erfasst wird und die daraus resultierende Erzeugnisinformation an die Auditoreinrichtung (11) übermittelt werden;
h) die Auditierungsinformation mit der Erzeugnisinformation ergänzt werden und darauf basierend eine Abrechnungsinformation generiert wird;
wobei einer oder mehrere Datenübertragungsprozesse durch ein Sicherheitsmodul (15) kryptografisch abgesichert durchgeführt werden.

14. Verfahren gemäß dem vorherigen Anspruch 13
**dadurch gekennzeichnet, dass**
die Auditoreinrichtung (11) im Falle eines Auslösungsereignisses einen Signaturvorgang initiiert, wobei
- die Auditoreinrichtung (11) einer Signiereinrichtung (19) eine Nachricht über das Auslösungsereignis übermittelt und/oder;
- eine Signiereinrichtung (19) der Auditoreinrichtung (11) eine manipulationssichere Bestätigung über die Kenntnisnahme des Auslösungsereignisses übermittelt und/oder;
- eine Signiereinrichtung (19) der Auditoreinrichtung (11) eine manipulationssichere Freigabe für eine Fortführung oder einen Abbruch der kontrollierten Bearbeitung, Überwachung und Abrechnung zur Entsorgung von Müll übermittelt.

15. Verfahren gemäß einem der vorherigen Ansprüche 13 -14
**dadurch gekennzeichnet, dass**
die Abrechnungsinformationen auf der Analyse der Auditierungsinformation basieren und/oder das Erzeugnis, bevorzugt durch eine färbende und/oder fluoreszierende Flüssigkeit, gekennzeichnet wird.
